# EUROPEAN PATENT APPLICATION

(11) **EP 3 543 320 A1**
(43) Date of publication of application: **25.09.2019**
(21) Application number: 18168215.4
(22) Date of filing: 19.04.2018
(51) Int. Cl.: C10L 5/44, C10L 9/02, C10L 9/10

(54) **DEVICE AND METHOD FOR ENHANCING BIOCHAR HYDROPHILICITY**

(30) Priority: 23.03.2018 LT 2018513
(71) Applicant: Vilniaus Gedimino technikos universitetas, 10223 Vilnius (LT)
(72) Inventor: BALTRENAS, Pranas, 07143 Vilnius (LT); BALTRENAITE, Edita, 07143 Vilnius (LT); USEVICIUTE, Luiza, 10224 Vilnius (LT)
(74) Representative: Pranevicius, Gediminas

(57) **Abstract**

The invention relates to the devices and methods for enhancing hydrophilicity of lignocellulosic biochar. The device for enhancing the hydrophilicity of biochar comprises the rhamnolipid material solution chamber connected with the biochar vacuum treatment chamber where in the lower part thereof, filled with the rhamnolipid solution, a heating element is arranged, and in the upper part thereof, separated from the lower part by a perforated partition, the chamber for treating biochar with the steam of the rhamnolipid material solution under vacuum conditions is arranged, connected with the vacuum pump and having the biochar agitator.

The method is characterized in enhancing the hydrophilicity of biochar by using the steam of the solution of the rhamnolipid material heated up to 100-105 °C and applied in vacuum of 99 990 Pa - 1333 Pa, created by the vacuum pump in the biochar treatment chamber.

## Description

### TECHNICAL FIELD

The invention relates to the devices and methods for enhancing hydrophilicity of lignocellulosic biochar, particularly for vacuum devices which are made to create the changes in pressure among biochar particles and increase liquid infiltration into and exfiltration from biochar pores; therefore, not only the external surface of biochar pores is affected, but also the internal one. This increases the ability of the biochar to retain more water and chemical substances. Such modified biochar can be used in various environmental technologies, for example, in biofiltration systems for increasing the time of water holding capacity in biochar, increasing retention of chemical substances in biochar, decreasing water usage in environmental technologies, increasing biodegradation of organic pollutants with lesser water usage, improving conditions for survival of microorganisms.

### BACKGROUND ART

The device and method for enhancing biochar hydrophilicity can be used for improvement of physical and chemical properties related with hydrophilicity of biochar, where the biochar is made of any initial lignocellulosic feedstock. The vacuum technology has many advantages against the traditional biochar immersion in the water, which usually affects only the external surface of biochar pores and a small part of the internal one. Biochar is made by pyrolysis of biomass. Then biochar is treated by vacuum and solution of the surface active substance. Post-pyrolysis treatment of biochar is necessary for increasing the internal volume of biochar pores and the surface area. The purpose of post-pyrolysis treatment of biochar with steam of the rhamnolipid solution is to increase the internal volume of biochar pores and the surface area, to remove harmful substances from biochar pores and to incorporate biological origin substances into the biochar structure, and this can be done by modifying biochar's physical and chemical properties using the steam of the rhamnolipid solution. The treatment with vacuum enhances infiltration of the solution into and exfiltration from biochar pores; therefore, removal of condensed tars from biochar pores is accelerated. The treatment with the solution is used for several purposes: 1) to increase the surface of the biochar's porous structure; 2) to neutralize pH of biochar; 3) to remove tar compounds from biochar's pores.

The prototype of this invention is patent No. US9809502. The technology described in this invention comprises the biochar placement in a vacuum chamber which is poured with the wettability enhancement agent, and vacuum is created using a vacuum pump connected with a vacuum hose having a valve. When a valve is closed, the pressure in the chamber is reduced from 99.99 kPa to 1.33 kPa. The biochar can be held in vacuum from several seconds to 100 minutes. A wettability enhancement agent gets into the vacuum chamber through the hose when the valve is opened. When the valve is opened, the treatment solution is used for the modification of thepores' surface. Vacuum can be created when biochar is affected by the solution or when the solution gets into the chamber. Biochar is mixed in a chamber by an agitator. After that, biochar is saturated with the rhamnolipid solution and can be affected by an air stream to remove the excess water from biochar. The modified biochar can be impregnated by additives for additional improvement of surface properties of pores.

The drawback of the prototype is that biochar is modified by a chemical solution. Otherwise than steam, the liquid phase of a reagent affects only the external surface of biochar pores and a small part of the internal surface area. Another drawback is that it is proposed to produce the modification solution using chemical surface active substances, which are toxic. For such modification, 10-100 times higher amount of chemical substances is to be used in comparison to the surface active substances of biological origin.

### SUMMARY OF THE INVENTION

The purpose of this invention is to enhance the biochar hydrophilicity in order to improve the biochar wettability by increasing the biochar's internal surface area. The mixing of biochar is applied along with saturation with the rhamnolipid solution and creation of a pressure drop among biochar particles under vacuum conditions. The solution, the steam of which is used for the enhancement of biochar hydrophilicity, is prepared from deionised water and the rhamnolipid surface active substance due to its high ability to wet hydrophobic surfaces.

Rhamnolipids are surface active glycolipids; they are classified as surface active substances of biological origin comprising a hydrophilic group formed of one or two molecules of rhamnose and a hydrophobic group formed of one or two chains of fatty acids. The rhamnolipid material is produced of renewable feedstock and high variety of microorganisms; however, most are usually formed of *Pseudomonas aeruginosa.* Compared to their synthetic analogues, the rhamnolipid materials are less toxic, more active for the wettability enhancement capacity and more stable in the extreme temperature, pH and salinity conditions. The wettability of hydrophobic low temperature biochar can be improved using the solution of a rhamnolipid material the concentration of which is in the range of 30-40 mg/l due to reduction of tension at the surface of water from 72 mN/m to 30-35 mN/m.

The biochar activation by steam can improve biochar hydrophilicity for several reasons. Firstly, biochar activation by steam improves the biochar's surface area because in this process condensed compounds which block biochar pores are released. The amount of water adsorbed by biochar is directly related with a high surface area of biochar and this is the reason why such biochar types can adsorb high amounts of water. Secondly, activation by steam improves microporosity due to interconnection of small pores and enlargement of internal cavities. Thirdly, activation by steam oxidizes the pore surface of biochar and forms acidic functional groups having oxygen (e. g. carboxyl, carbonyl, ether and phenolic hydroxyl groups) at the surface, which improves the hydrophilicity of biochar due to creation of hydrogen bonds with water molecules. Fourthly, activation by steam enforces removal of condensed compounds (monoaromatic and polycyclic aromatic hydrocarbons, benzonitriles, benzofurans) from biochar pores, which previously prevented entrance of water to biochar. The effect of blocking the pores reduces the hydrophilicity of biochar. It is important to highlight physical importance of steam for the increase of the hydrophilicity of biochar. Since water vapour has lesser density (0.59 kg/m³, when boiling temperature is 99.63 °C) and viscosity (0.000012 kg/m · s, when boiling temperature is 99.63 °C) compared to the liquid water phase (997.996 kg/m³ and 0.000978 kg/m·s respectively, when water temperature is 21 °C), its molecules can penetrate into the porous internal structure of biochar and its capillaries more easily during biochar activation with steam; consequently, a better effect of steam on previously mentioned biochar properties can be seen.

A device for creation of the enhanced hydrophilicity of biochar has both a chamber for the rhamnolipid material solution and a hole from which the rhamnolipid material solution gets into the lower part of a biochar vacuum treatment chamber through outlet hose. A heating element is used for the creation of steam of the rhamnolipid material solution, which is used for the oxidation of biochar particles and removal of tars. A temperature measuring element and automatic control block are used to maintain the temperature of the steam of the rhamnolipid solution in the range of 100-105 °C. A lower part of the biochar vacuum treatment chamber is separated from an upper part by a perforated partition which is used for separation of the biochar filling material from the rhamnolipid material solution and for extraction of modified biochar when the modification process is finished. A flange connection with a gasket is used for the extraction of a perforated partition before the modified biochar is removed. An agitator, which consists of an electric motor, shaft and agitation blades in form of rods, performs the mixing of the biochar particles, thus enhancing exchange between solution steam and the internal biochar's structure. Continuous work of the agitator is regulated by an automatic control block. The biochar particles of 2-4 mm fraction are loaded into the upper part of the chamber through the biochar falling opening and the biochar particles are treated by steam for 2.5-3.0 hours. During the process of treatment with steam of the solution, the pressure in the chamber is reduced from 90 999 Pa to 1333 Pa due to creation of a fluidized bed among biochar particles.

### BRIEF DESCRIPTION OF DRAWINGS

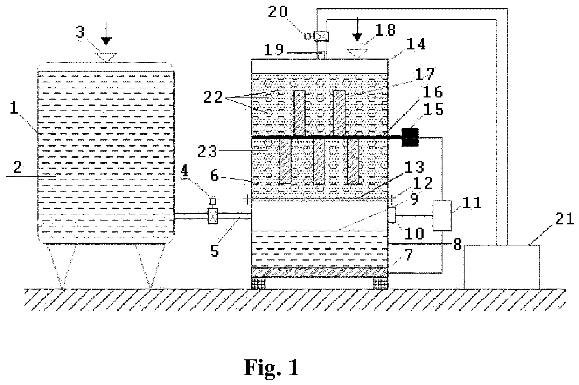

Fig. 1 is a schematic longitudinal sectional view of a device for modification of biochar using steam of the rhamnolipid material solution and vacuum.

### DESCRIPTION OF THE PREFERRED EMBODIMENT

A device for enhancement of the hydrophilicity of biochar comprises a chamber 1 for the solution of the rhamnolipid material, where the chamber 1 is filled with the solution of the rhamnolipid material 2 through a filling opening 3; a valve 4, which connects the chamber 1 of the solution of the rhamnolipid material with a biochar vacuum treatment chamber 6 through a hose 5; a heating element 7; a lower part 8 of the vacuum treatment chamber 6, which is filled with the solution of the rhamnolipid material 9; a temperature sensor 10; an automatic control block 11; a flange connection with a gasket 12; a perforated partition 13; an upper part 14 of the vacuum treatment chamber 6; an electric motor 15 with a shaft 16 and mixing blades 17; a biochar feeding opening 18; a nipple 19 which connects the vacuum treatment chamber 6 through a valve 20 with a vacuum pump 21 designed to create vacuum in an upper part 14 of the vacuum treatment chamber 6, which is filled with the steam 23 of the solution of the rhamnolipid material 2 and biochar particles 22, and in capillaries of biochar's particles 22.

### DEVICE OPERATION PRINCIPLE

The chamber 1 is filled with the solution of the rhamnolipid material 2 through the hole 3. When the valve 4 is opened, the solution of the rhamnolipid material 2 enters the lower part 8 of the vacuum treatment chamber 6 through the hose 5 from the chamber 1. The solution of the rhamnolipid material 9 is heated in the lower part 8 of the vacuum treatment chamber 6 by the heating element 7 till the boiling temperature for creation of maximally (till 100%) vapour saturated air. When the temperature of vapour reaches 100 - 105 ° C, which is measured by the temperature sensor 10 connected to the automatic control block 11, the heating element 7 automatically turns off. When vapour temperature falls below 100 °C, the automatic control block 11 repeatedly turns on the heating of the solution of the rhamnolipid material 9. Moreover, the automatic control block 11 controls continuous work of an agitator consisting of the electric motor 15, the shaft 16 and agitation blades 11 in form of rods. During the modification process of biochar 22, condensed compounds are released from both internal and external structures of biochar and, therefore, the exchange of the solution of the rhamnolipid material with the internal structure of biochar 22 is enhanced. The perforated partition 13 with the flange connection and the gasket 12 are designed to avoid biochar 22 particles falling into the solution of the rhamnolipid material 9, and, when the modification process is finished, for the extraction of the modified biochar 22. The perforated partition 13 also contributes to equal distribution of steam in the biochar 22, which is located in the upper part 14 of the vacuum treatment chamber 6. 1 kilogram of biochar 22, consisting of particles of 2-4 mm, is fed through the opening 18 to the upper part 14 of the vacuum treatment chamber 6. Biochar is treated with steam 23 of the solution of the rhamnolipid material for 2.5-3.0 hours. It is proven that biochar, saturated with steam 23 of the solution, loses its initial hydrophobicity after 7 days. It is related with filling of spaces among pores and oxidation of pores' surface. When biochar 22 is saturated with steam 23 of the solution of the rhamnolipid material, vacuum of 99 990 Pa - 1333 Pa is created in the upper part 14 of the vacuum treatment chamber 6 using the vacuum pump 21 for the reason of biochar particles 22 hanging over the steam 23 of the rhamnolipid solution. It improves a contact between biochar particles 22 and steam 23. When the valve 20 of the device is opened, pressure in the chamber is reduced from 99 990 Pa to 1333 Pa during the operation of the vacuum pump 21. Biochar is held in vacuum for 2.5-3 hours. The vacuum accelerates infiltration of liquids into and exfiltration from biochar pores. Due to the effect of biochar hanging over, the blowing and cleaning of biochar capillaries are improved. The filling level of liquids in the lower part 8 of the vacuum treatment chamber 6 reaches 20% of the volume of the vacuum treatment chamber 6, and the biochar level in the upper part 14 of the vacuum treatment chamber 6 reaches 60% of the volume of the vacuum treatment chamber 6.

## Claims

1. A device for enhancement of the hydrophilicity of biochar comprising the vacuum chamber with the biochar agitator; the biochar filling opening; the solution filling opening; and the vacuum pump, **characterized by** having:
- a rhamnolipid solution (2) chamber (1) with the solution filling opening (3) and the valve (4) controlling the filling of the solution (2) to the lower part (8) of the biochar vacuum treatment chamber (6),
- a heating element (7) arranged in the lower part (8) of the vacuum treatment chamber (6) for heating the rhamnolipid solution (9) till the vapour phase,
- a perforated partition (13) separating the upper part (14) of the vacuum treatment chamber (6) filled with biochar (22) from the lower part (8) of the vacuum treatment chamber (6) filled with the rhamnolipid solution (9) and designed for steam (23) of the rhamnolipid solution to pass into the upper part (14) of the vacuum treatment chamber (6);
- a vacuum pump (21) connected to the upper part (14) of the vacuum treatment chamber (6) through the valve (20) and designed for creation of vacuum in the upper part (14) of the vacuum treatment chamber (6) and the fluidized bed in biochar.

2. The device according to the claim 1, **characterized in that** the lower part (8) of the biochar vacuum treatment chamber (6) is filled with the rhamnolipid solution (9) up to 60% of its volume.

3. The device according to the claim 1, **characterized in that** the upper part (14) of the vacuum treatment chamber (6) is filled with biochar (22) up to 60% of its volume.

4. The device according to the claim 3, **characterized in that** the fraction of biochar (22) is 2.0-4.0 mm.

5. A method of enhancing the hydrophilicity of biochar, including the treatment of biochar with the solution of the rhamnolipid material, when mixing the biochar under vacuum conditions, **characterized in that** the steam (23) of the rhamnolipid solution (9), heated by the heating element (7) up to 100-105 °C, is used for enhancement of the hydrophilicity of biochar (22) in presence of vacuum of 99 990 Pa - 1333 Pa created in the biochar (22) treatment chamber (14) by the vacuum pump (21).

6. The method according to the claim 5, **characterized in that** the concentration of the rhamnolipid material in the solution is 30-40 mg/l.

7. The method according to the claim 5, **characterized in that** biochar (22) is mixed with the steam (23) of the rhamnolipid solution using the agitator (16) from 2.5 to 3.0 hours.

8. The method according to the claim 5, **characterized in that** the work of the heating element (7) and the agitator (16) is regulated by the temperature sensor (10) through the automatic control block (11).
